# EUROPEAN PATENT SPECIFICATION

(11) **EP 2 056 385 B1**
(45) Date of publication and mention of the grant of the patent: **13.02.2013**
(21) Application number: 08253557.6
(22) Date of filing: 30.10.2008
(51) Int. Cl.: H01M 8/04

(54) **Method and apparatus for controlling fuel concentration in direct liquid fuel cell**
Verfahren und Vorrichtung zum Steuern der Brennstoffkonzentration in einer flüssigen Brennstoffzelle
Procédé et appareil pour le contrôle de la concentration de carburant dans une pile à combustible liquide direct

(30) Priority: 30.10.2007 KR 20070109804
(43) Date of publication of application: 06.05.2009
(73) Proprietor: Samsung SDI Co., Ltd., Suwon-si, Gyeonggi-do (KR)
(72) Inventor: Krewer, Ulrike, Suwon-si, Gyeonggi-do (KR); Kim, Hee-Tak, Suwon-si, Gyeonggi-do (KR)
(74) Representative: Mounteney, Simon James

(56) References cited:
- US-A1- 2007 148 506
- KREWER ET AL: "Understanding the dynamic behaviour of direct methanol fuel cells: Response to step changes in cell current" JOURNAL OF ELECTROANALYTICAL CHEMISTRY AND INTERFACIALELECTROCHEMISTRY, ELSEVIER, AMSTERDAM, NL, vol. 609, no. 2, 23 October 2007 (2007-10-23), pages 105-119, XP022310630 ISSN: 0022-0728
- KREWER U ET AL: "Transfer function analysis of the dynamic behaviour of DMFCs: Response to step changes in cell current" JOURNAL OF POWER SOURCES, ELSEVIER SA, CH, vol. 154, no. 1, 9 March 2006 (2006-03-09), pages 153-170, XP025083764 ISSN: 0378-7753 [retrieved on 2006-03-09]

## Description

### BACKGROUND

### 1. Field of the Invention

The present invention relates to fuel cells, and more particularly, to a method and an apparatus for controlling fuel concentration in a direct liquid fuel cell (DLFC).

### 2. Discussion of Related Art

A DLFC is a fuel cell directly using a liquid fuel in its anode and as a representative, and includes a direct methanol fuel cell (DMFC). Since the DLFC uses solid polymer as an electrolyte, it has no risk of electrolyte corrosion or electrolyte evaporation and is operated at an operating temperature less than 100°C. As such, it becomes suitable as a power supply for portable or small electronic equipment. In view of these advantages, the study of DLFCs has actively been pursued.

The performance of a DLFC can be affected by the fuel concentration supplied to the anode. Since the DLFC generates electricity by electrochemically reacting the liquid fuel and an oxidant, the fuel concentration may be lowered during its operation. As a result, the supply of insufficient fuel due to the low fuel concentration can damage an anode electrode, making it possible to deteriorate the operational performance of the DLFC. Therefore, in order to obtain a satisfactory operational performance, the fuel concentration needs to be maintained in a proper range.

Further, as portable electronic equipment, such as portable terminals, portable multimedia players (PMPs), etc., become smaller and smaller, the DLFCs also need to be small so that they can be used as power supplies for such portable electronic equipment.

In order to meet the current demand, both a small DLFC and a concentration sensor for controlling the fuel concentration in the prepared fuel cell become needed. However, most conventional concentration sensors rapidly degrade their sensing ability as usage time is increased. Further, since the size of the concentration sensor is typically relatively large, it becomes a problem to adopt it for small DLFCs.

Dynamic modelling of a DLFC is provided by XP022310630.

### SUMMARY OF THE INVENTION

The present invention sets out to provide a method and an apparatus for controlling fuel concentration in a DLFC using the fuel cell output voltage of a fuel cell stack in response to the sudden change in fuel cell output current per unit area.

The present invention also sets out to provide a high-performance small DLFC that uses a method for controlling fuel concentration as described above.

According to an embodiment of the present invention, a method for controlling fuel concentration in a DLFC includes: (a) monitoring the fuel cell output current and the fuel cell output voltage of a fuel cell stack; (b) sensing whether fuel cell output current per unit area becomes lowered by more than a certain magnitude and is maintained for a constant time, (c) sensing from an initial fuel cell output voltage just before a point in time when the current per unit area is lowered, to a new fuel cell output voltage, the new fuel cell output voltage being increased as the current per unit area is lowered and being then maintained at a new current per unit area; (d) comparing the new fuel cell output voltage with a transient voltage sensed between the initial fuel cell output voltage and the new fuel cell output voltage; and (e) if the transient voltage is equal to or less than the new fuel cell output voltage, increasing the fuel concentration in a liquid fuel supplied to the fuel cell stack.

In an embodiment, the method for controlling fuel concentration in the DLFC in accordance with the present invention further includes maintaining the fuel concentration in a liquid fuel supplied to the fuel cell stack if the transient voltage is greater than the new fuel cell output voltage.

According to another embodiment of the present invention, a method for controlling fuel concentration in a DLFC includes:(a) limiting fuel cell output current so that the fuel cell output current per unit area of a fuel cell stack is lowered by more than a certain magnitude; (b) sensing from an initial fuel cell output voltage just before a point in time when the current per unit area is limited, to a new fuel cell output voltage, the new fuel cell output voltage being increased as the current per unit area is lowered and being then maintained at a constant level; (c) comparing the new fuel cell output voltage with a transient voltage sensed between the initial fuel cell output voltage and the new fuel cell output voltage; and (d) if the transient voltage is equal to or less than the new fuel cell output voltage, increasing the fuel concentration in liquid fuel supplied to the fuel cell stack.

According to another embodiment of the present invention, an apparatus for controlling fuel concentration in a DLFC, which controls the fuel concentration in the liquid fuel directly supplied to an anode of a fuel cell stack, includes a constant current circuit unit for stepwise lowering the current per unit area in the fuel cell stack. A sensor senses from an initial fuel cell output voltage just before a point in time when the current per unit area is lowered to a new fuel cell output voltage, the new fuel cell output voltage being increased from the point in time and being then stabilized at the new fuel cell output voltage. A comparator senses a transient voltage between the initial fuel cell output voltage and the new fuel cell output voltage with the new fuel cell output voltage, and if the transient voltage is equal to or less than the new fuel cell output voltage, an operating controller increases the fuel concentration in a liquid fuel supplied to the fuel cell stack.

According to yet another embodiment of the present invention, an apparatus for controlling fuel concentration in a DLFC, which controls the fuel concentration in the liquid fuel directly supplied to an anode of a fuel cell stack, includes a memory in which a program is stored. A processor is connected to the memory to perform the program. The processor functions, by means of the program, to: fuel cell output test current, which changes from a first current per unit area to second current per unit area less than the first current per unit area, from the fuel cell stack; sense a new fuel cell output voltage increase in response to the test current from the fuel cell stack; and if a transient voltage prior to reaching the new fuel cell output voltage is equal to or less than the new fuel cell output voltage, increase the fuel concentration in the liquid fuel.

According to still another embodiment of the present invention, an apparatus for controlling fuel concentration in a DLFC includes a fuel cell stack having an anode, a cathode, and an electrolyte positioned between the anode and the cathode and generating electric energy by an electrochemical reaction of a liquid fuel supplied to the anode and an oxidant supplied to the cathode. A fuel supply device supplies the liquid fuel to the fuel cell stack. A control apparatus controls the fuel supply device in order to control the fuel concentration in the liquid fuel supplied to the fuel cell stack. The control apparatus includes a constant current circuit unit for stepwise lowering fuel cell output current per unit area of the fuel cell stack. A sensor senses from an initial fuel cell output voltage of the fuel cell stack just before a point in time when the fuel cell output current per unit area is lowered, to a new fuel cell output voltage, the new fuel cell output voltage being increased from the point in time and being then stabilized at a constant level. A comparator compares the new fuel cell output voltage with a transient voltage between the initial fuel cell output voltage and the new fuel cell output voltage. If the transient voltage is equal to or less than the new fuel cell output voltage, an operating controller increases the fuel concentration in liquid fuel supplied to the fuel cell stack.

A constant current circuit unit may be connected between the fuel cell stack and an external load.

The constant current circuit unit may include a constant current diode serially connected between the fuel cell stack and the external load.

The processor may control a switching device serially connecting a constant current diode between the fuel cell stack and an external load in order to generate the test current.

The above and other features of the invention are set out in the appended Claims.

### BRIEF DESCRIPTION OF THE DRAWINGS

Embodiments of the invention will now be described by way of example and with reference to the accompanying drawings, in which:-

FIG. 1 is a schematic block diagram of a DLFC according to an embodiment of the present invention.

FIG. 2 is a flow chart depicting a method for controlling fuel concentration in a DLFC according to an embodiment of the present invention.

FIGS. 3A and 3B are graphs for explaining a method for controlling fuel concentration in a DLFC according to an embodiment of the present invention.

FIG. 3C is a graph depicting the relationship of fuel cell output voltage and fuel concentration in the DLFC according to an embodiment of the present invention.

FIG. 3D is a graph depicting the relationship of fuel cell output voltage and fuel supplying speed in the DLFC according to an embodiment of the present invention.

FIG. 4 is a schematic block diagram of a DLFC according to an embodiment of the present invention.

FIG. 5 is a flow chart depicting a method for controlling fuel concentration in a DLFC according to an embodiment of the present invention.

FIG. 6 is a schematic block diagram for explaining a control apparatus adaptable in the DLFC according to an embodiment of the present invention.

### DETAILED DESCRIPTION

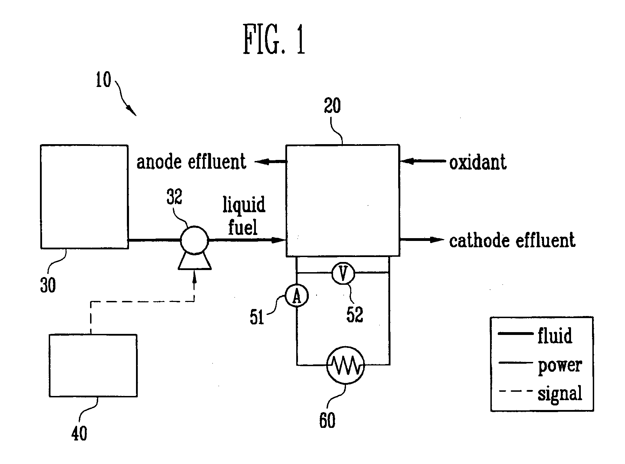

Referring to FIG. 1, the DLFC 10 includes a fuel cell body 20 generating electric energy by an electrochemical reaction of a liquid fuel with an oxidant and supplying the generated electric energy to an external load 60. A fuel supply device includes a fuel tank 30 storing the liquid fuel to be supplied to the fuel cell body 20 and a fuel pump 32 transferring the stored liquid fuel to the fuel cell body 20. A control device 40 is coupled to a current sensor 51 and a voltage sensor 52 and controls the fuel concentration in the liquid fuel supplied to the fuel cell body 20 within a desired range based on the change process in the fuel cell output voltage responding to sudden degradation in current per unit area output from the fuel cell body 20.

The fuel cell body 20 typically includes a fuel cell stack. The fuel cell stack includes a membrane electrode assembly (MEA) having an anode, a cathode, and a solid polymer electrolyte positioned between the anode and the cathode. The fuel cell stack may be designed as an active type of stack including a separate oxidant supply device for supplying the oxidant to the cathode or a semi-passive type (also, referred to as a passive type) of stack not including the oxidant supply device but including a fuel transfer device supplying the liquid fuel to the anode. Herein, the liquid fuel includes petroleum or hydro-carbonaceous material obtained from petroleum, methanol, and ethanol and can also include a mixed fuel of a liquid fuel as main component and some gas fuel. The oxidant includes pure oxygen or oxygen in the air.

In the foregoing fuel cell stack, the electrolyte can be implemented by fluoric electrolyte membrane or hydro-carbonaceous electrolyte membrane. The anode can include an anode electrode positioned on one surface of the electrolyte membrane and a separator contacting the anode electrode and including a flow field for effectively supplying the liquid fuel to the anode electrode. Similarly to this, the cathode can include a cathode electrode positioned on other surface of the electrolyte membrane and a separator contacting the cathode electrode and including a flow field or a hole for effectively supplying the oxidant to the cathode electrode. The fuel cell body 20 also includes an anode effluent port and a cathode effluent port.

The control device 40 is coupled to the current sensor 51 for measuring current per unit area output from the fuel cell body 20 and to the voltage sensor 52 for measuring voltage output from the fuel cell body 20, so as to monitor the change in the current and voltage output from the fuel cell body 20. The control device 40 can be implemented by a logic circuit such as a programmable logic controller (PLC) or some functional part of a microprocessor.

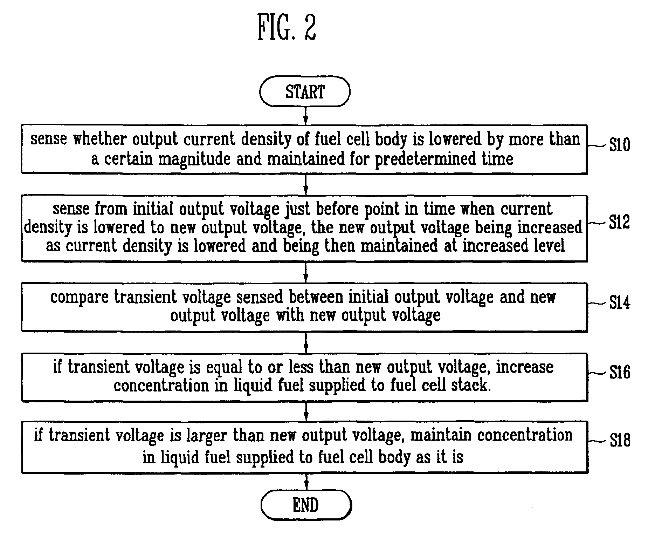

Referring now to FIGS. 1 and 2, the control device 40 first senses (S 10) whether the current per unit area output from the fuel cell body 20 becomes lowered by more than a certain magnitude and is maintained for a constant time. In the step (S10), the point in time when the fuel cell output current per unit area in the fuel cell body 20 sequentially sensed in a constant time interval through the current sensor 51 is suddenly lowered stepwise is obtained. The condition where the current per unit area is suddenly lowered includes the case where the power demanded from the external load 60 connected to the fuel cell body 20 becomes considerably large during the operation of the system so that the external load 60 imposes a burden on the fuel cell body 20. In this case, the fuel cell output current per unit area in the fuel cell body 20 can instantly be lowered by more than a certain magnitude.

Next, the control device 40 senses (S12) from a fuel cell output voltage (hereinafter, referred to as initial fuel cell output voltage) just before a point in time when the current per unit area is suddenly lowered, to the new fuel cell output voltage, the new fuel cell output voltage increasing its level as the current per unit area is lowered and being then maintained at a new level. In the step (S12), when the fuel cell output current per unit area in the fuel cell body 20 is suddenly lowered, the transient voltage between the initial fuel cell output voltage and the new fuel cell output voltage is also sensed. The transient voltage can reach the new fuel cell output voltage by being instantly raised to a level higher than that of the new fuel cell output voltage and then stabilized at the new fuel cell output voltage or by being slowly increased from the initial fuel cell output voltage.

Subsequently, the control device 40 compares (S 14) the transient voltage with the new fuel cell output voltage. The step (S14) judges whether the state of current fuel concentration is proper or not based on the magnitude of the transient voltage indicating different levels according to the fuel concentration in the liquid fuel directly supplied to the fuel cell body 20.

Next, the control device 40 increases (S16) the fuel concentration in the liquid fuel supplied to the fuel cell body 20 if the transient voltage is equal to or less than the new fuel cell output voltage. The control device 40 maintains (S16) the fuel concentration in the liquid fuel supplied to the fuel cell body as it is if the transient voltage is greater than the new fuel cell output voltage.

The fuel cell output voltage of the DLFC as described above is considerably affected by the operating conditions, such as the fuel concentration near the anode inlet of the fuel cell stack, or the fuel supply amount or the current per unit area level of the fuel cell stack. In other words, in the fuel cell output voltage of the DLFC, the overshooting of the fuel cell output voltage responds to the sudden change in the fuel cell output current per unit area. That is, the dynamic operation is based on the supply of sufficient fuel with respect to the single cell (hereinafter, referred to as a cell) in the fuel cell stack. The supply of sufficient fuel can be judged by whether the amount of fuel supplied to the anode inlet of the fuel cell stack, that is, the fuel concentration is in a proper range. Accordingly, when the fuel cell output current per unit area in the fuel cell stack is changed stepwise, it can be judged that the fuel concentration supplied to the anode inlet is low. The present invention uses this to control the fuel concentration in the DLFC.

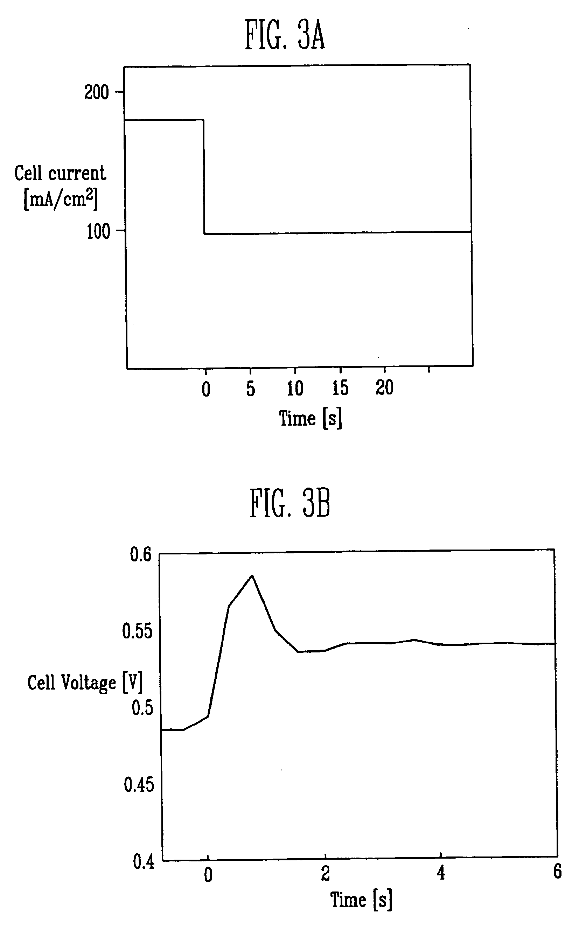

FIGS. 3A to 3D are graphs for depicting the operating principle of the DLFC according to the present invention. In explaining the present embodiment, the fuel cell output current per unit area and the fuel cell output voltage each corresponds to a cell current and a cell voltage of a graph shown in FIGS. 3A to 3D.

The operating principle involves responding to an increase of the fuel cell output voltage of the fuel cell stack to the new voltage level when the current per unit area level of the fuel cell stack becomes low stepwise. The varying fuel cell output voltage and a sensed transient voltage higher than the new fuel cell output voltage indicates the state of the fuel concentration supplied to the anode of the fuel cell stack.

More specifically describing the operating principle in accordance with the present invention, the fuel cell output current per unit area of the fuel cell stack at a constant interval is monitored and the fuel cell stack, whose anode is supplied with methanol of 1 molar at flow velocity of 1ml/min on an average, is prepared. As shown in FIG. 3A, when the fuel cell output current per unit area of the fuel cell stack through the current sensor is suddenly lowered from 180mA/cm² to 100mA/cm², that is, by about 80 mA/cm², the change in the fuel cell output voltage of the fuel cell stack is measured. As shown in FIG. 3B, the fuel cell output voltage of the fuel cell body increases from initial fuel cell output voltage of about 0.49V to the new fuel cell output voltage of about 0.54V according to the sudden degradation of the current per unit area as shown in FIG. 3A. The fuel cell output voltage becomes stabilized, changing from the initial fuel cell output voltage to the new fuel cell output voltage via the transient voltage of about 0.58V.

The magnitude of the lowered fuel cell output current per unit area as described above depends on operating conditions of the fuel cell stack and the performance of the MEA and in an embodiment the magnitude can be set to a value greater than about 30mA/cm². If current per unit area change magnitude is set to about 30mA/cm² or less, there is little resulting transient voltage at the fuel cell output voltage. The upper limit of the magnitude of the lowered fuel cell output current per unit area as described above can be restricted by considering rated fuel cell output current per unit area that can be preset by means of the structure of the fuel cell stack. In this case the change in fuel cell output voltage is sensed when the lowered fuel cell output current per unit area is maintained at a constant level for a predetermined time that is set to be at least 2 seconds or more.

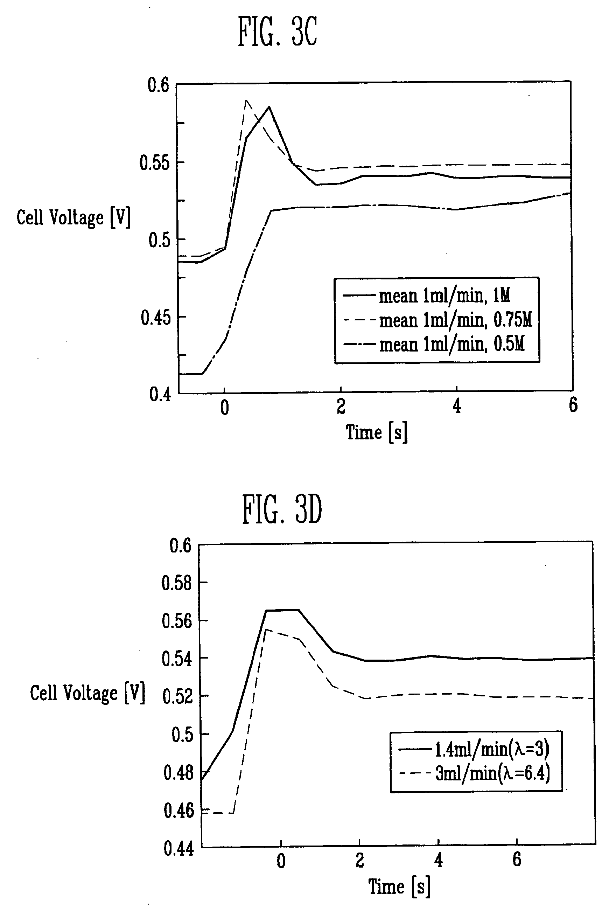

Referring now to FIG. 3C, under the operating condition of the DMFC system differently setting the fuel concentration at 1molar, 0.75 molar, 0.5 molar, when the fuel cell output current per unit area is rapidly lowered in a short time from 180mA/cm² to 100mA/cm², the fuel cell output voltage of the fuel cell stack each changes from about 0.49V to the new voltage of about 0.54V via the transient voltage of about 0.58V in the case of 1molar, from about 0.49V to the new voltage of about 0.55V via the transient voltage of about 0.59V in the case of 0.75 molar, and from about 0.41 V to the new voltage of about 0.52V without having the transient voltage in the case of 0.5 molar.

As another example, as shown in FIG. 3D, under the operating condition of the DMFC system supplying methanol of 1molar at each flow velocity of 1.4ml/min and 3ml/min on an average, when the fuel cell output current per unit area of the fuel cell stack is suddenly lowered from 180mA/cm² to 100mA/cm², the fuel cell output voltage of the fuel cell stack changes from about 0.48V to the new voltage of about 0.54V via the transient voltage of about 0.58V in the case where the fuel supply speed is 1.4ml/min on the average, and from about 0.46V to the new voltage of about 0.52V via the transient voltage of about 0.56V in the case where the fuel supply speed is 3ml/min on the average.

As can be appreciated from the experimental results described above, when the anode inlet of the fuel cell body is supplied with fuel having a concentration lower than that required in the fuel cell stack as in the case of the methanol fuel with stoichiometric fuel quantity approaching 1 and a concentration of 0.5mol, since the fuel supplied to the cell is lacking, it is understood that the cell cannot perform the dynamic operation. On the other hand, in the case of the methanol fuel of 0.75 molar, 1molar, and higher, it is understood that the cell can perform the dynamic operation by means of the supply of sufficient fuel. As such, assuming that the proper molar of methanol in the fuel cell stack or in the anode inlet of the fuel cell stack is over 0.5 molar, in accordance with the present invention, it can be easily judged as to whether the current concentration in the fuel is positioned near any level using different transient voltages due to the difference in the fuel concentration, and in the case of methanol, when the fuel concentration is 0.5 molar or less, the fuel concentration in the anode inlet can be controlled in the range of a desired concentration by further supplying fuel with concentration higher than 0.5 molar.

As described above, in accordance with the present invention, the dynamic operation of the fuel cell output voltage indicates when the fuel concentration in methanol supplied to the fuel cell stack in the DMFC system is in the proper range. Therefore, in accordance with the present invention the fuel concentration is controlled by judging whether the fuel concentration currently supplied to the fuel cell body is a proper state or a low state by using the dynamic operation of the fuel cell output voltage as described above.

In accordance with the present invention, when the fuel cell output current per unit area of the fuel cell stack whose anode is supplied with methanol of 1 molar at flow velocity of 1ml/min on an average is lowered from 380mA/cm² to 300mA/cm² stepwise, the fuel cell output voltage output from the fuel cell stack changes from about 0.35V to the new voltage of about 0.38V. A transient voltage higher than the new fuel cell output voltage is not generated. As such, the control technique in accordance with the present invention is not applied when the fuel cell output current per unit area does not become lowered more than a certain magnitude and a transient voltage higher than the new fuel cell output voltage is not generated.

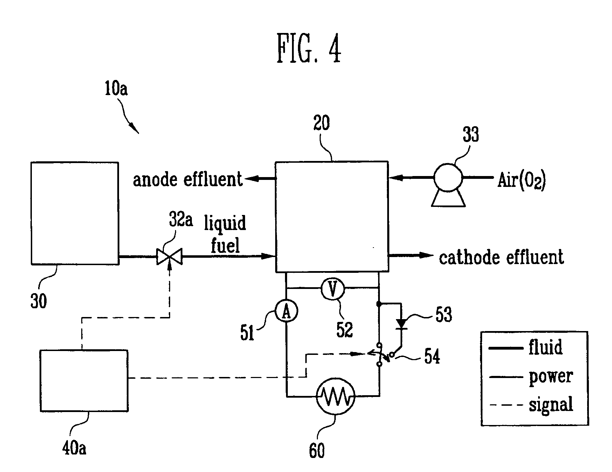

FIG. 4 is a schematic block diagram of a DLFC according to another embodiment of the present invention.

Referring to FIG. 4, the DLFC 10a includes the fuel cell body 20, the fuel tank 30, a valve 32a, an air pump 33, a control device 40a, a current sensor 51, a voltage sensor 52, a constant current diode 53, and a switching device 54.

The DLFC 10a in accordance with the present invention includes the constant current diode 53 selectively connected between the fuel cell body 20 and an external load 60 in series by means of the switching device 54 and the control device 40a controlling an on-off operation of the switching device 54, in order to artificially lower current intensity per unit area of the fuel cell body 20 by more than a certain magnitude, as compared to the DLFC 10 according to the previously described embodiment.

The constant current diode 53 is a device that forcibly lowers the current per unit area in the fuel cell body 20 by more than a certain magnitude. The present embodiment can also be implemented using a constant current circuit unit using a current mirror circuit in addition to the constant current diode 53.

The switching device 54 is a device that electrically connects the fuel cell body 20 to the constant current diode 53 only when measuring the fuel concentration. The switching device is on-off controlled by means of the control signal applied from the control device 40a and can be implemented by a mechanical switch or a semiconductor switch.

The control device 40a basically includes the components and functions of the control device 40 in the previously described embodiment as well as including the components and functions for on-off controlling the switching device 54 serially connecting the output terminal of the fuel cell body 20 to the constant current diode 53 so that the magnitude of the current per unit area in the fuel cell body 20 is lowered by more than a certain magnitude in order to measure and control the fuel concentration in the liquid fuel supplied to the anode of the fuel cell body 20.

Also, the control device 40a controls the opening of the valve 32a based on the current state of the fuel concentration obtained from the magnitude of the transient voltage of the change in the fuel cell output voltage responding to the stepped change in the fuel cell output current per unit area of the fuel cell body 20.

The DLFC in accordance with the present invention can further include apparatuses for water management, heat management, and power management in a system in order to improve operation performance and operation efficiency. In other words, the fuel cell body described in the present specification can basically include any one of the apparatuses for the water management, the heat management, and the power management together with the semi-passive or the active type of the fuel cell stack. As the apparatuses for the water management, the heat management, and the power management, there may be a mixing tank receiving and storing the high concentration of fuel from the fuel tank and receiving and storing non-reaction fuel and water from the fuel cell body, and supplying the stored fuel to the anode of the fuel cell stack; a heat exchanger using or recovering heat of fluid from the fuel cell stack; a power conversion apparatus converting the fuel cell output of the fuel cell stack; a subsidiary power supply undertaking the power required in starting or overload; a charging circuit charging the subsidiary power supply; and various sensor sensing temperature, flux, and the like.

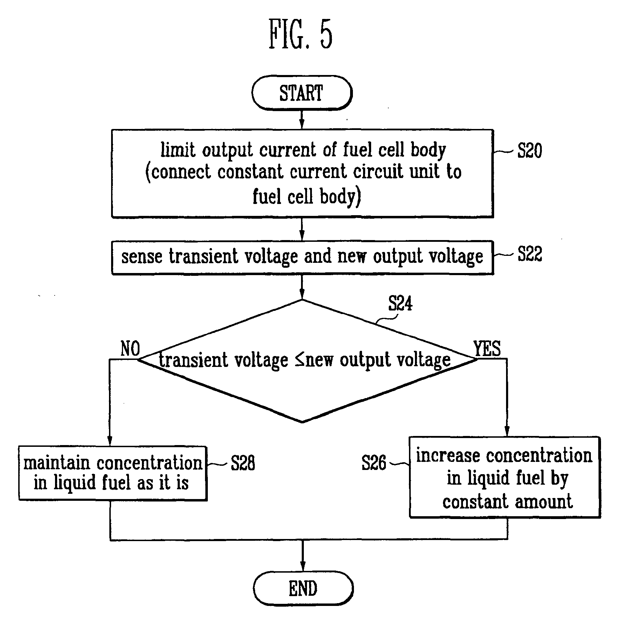

The operating process of the DLFC in accordance with the present embodiment of the invention will now be described with reference to FIG. 5, a flow chart depicting a method for controlling fuel concentration in a DLFC.

Referring to FIGS. 4 and 5, the control device 40a first controls a switching device 54 to be on state to serially connect the constant current diode 53 to the output side of the fuel cell body 20 so that the fuel cell output current per unit area of the fuel cell body 20 is limited (S20) to be instantly lowered to a low level.

Next, the control device 40a senses the fuel cell output voltage of the fuel cell body 20 responding to the sudden change in the current per unit area. At this time, the control device 40a senses (S22) the transient voltage between the initial fuel cell output voltage and the new fuel cell output voltage together with the new fuel cell output voltage which increases and then stabilizes from the initial fuel cell output voltage at the initial stage of reaction.

Next, the control device 40a compares (S24) the sensed transient voltage with the new fuel cell output voltage. According to the comparison result, if the transient voltage is less than or equal to the new fuel cell output voltage, the fuel is further supplied (S26) in order to increase the fuel concentration in the liquid fuel. Also, according to the comparison result, if the transient voltage is greater than the new fuel cell output voltage, the current supply state of the fuel is maintained (S28) in order to maintain the fuel concentration in the liquid fuel as it is.

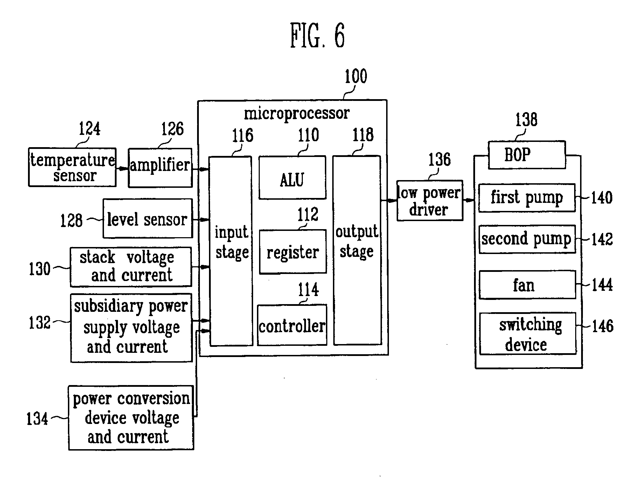

FIG. 6 is a block diagram depicting a control apparatus for the DLFC in accordance with the present invention.

Referring to FIG. 6, the control apparatus in accordance with the present invention can include a microprocessor 100 and a sensor unit providing information on the fuel cell output current and fuel cell output voltage of the fuel cell to the microprocessor 100. Also, the control apparatus can further include a constant current circuit unit coupled to the fuel cell by means of the control of the microprocessor 100.

The microprocessor 100 includes an arithmetic logic unit (ALU) 110 for performing calculations, a register 112 for temporarily storing data and command words, and a controller 114 for controlling an operation of a fuel cell system. The microprocessor 100 senses signals input to an input stage 116 and generates control signals for controlling the operation of the fuel cell system based on the sensed signals and outputs them through an output stage 118. For example, the microprocessor 100 stores the change in the fuel cell output voltage of the fuel cell stack responding to the fuel cell output current per unit area stepwise lowered in the register 112 and compares the stored values in the ALU 110 to judge whether the current fuel concentration in the liquid fuel supplied to the anode of the fuel cell stack is proper, and then generates the control signals from the controller 114 based on the judged fuel concentration state and controls the fuel concentration through the generated control signals, making it possible to improve stability and reliability of a small fuel cell system.

The input stage in the microprocessor 100 can be input with: an output signal of a temperature sensor 124 detecting temperature of the fuel cell stack or a balance of plants (BOP) of the fuel cell; an output signal of a level sensor 128 detecting a level of fluid stored in a fuel tank, a mixing tank, and a water tank; an output signal of a sensor 130 detecting the voltage or the current of the fuel cell stack; an output signal of a sensor 132 detecting voltage or current of a subsidiary power supply such as a secondary battery or a super capacitor; and an output signal of a sensor 134 detecting a primary side or a secondary side of a power conversion device such as a digital-analog converter or a digital-digital converter. The output signal of a specific sensor (for example, temperature sensor 124 shown in FIG. 6) may be amplified by means of an amplifier 126 and can then be input to the input state 116.

The control signals transferred to the BOP 138 through the output stage 118 in the microprocessor 100 can directly be transferred to the BOP 138 or can be transferred to the BOP 138 through a BOP driver for controlling the operation of the BOP. The BOP driver can be interfaced with a low power driver 136 in order to improve the efficiency of the system. The BOP 138 can include at least any one of a first pump 140, a second pump 142, a fan 144, and a switching device 146. The first pump 140 may correspond to a fuel pump directly supplying the liquid fuel stored in the fuel tank to the fuel cell stack or supplying it to fuel cell stack through the mixing tank. The second pump 142 may correspond to an air pump supplying an oxidant such as air, etc., to the fuel cell stack. The fan 144 may correspond to a heat exchanging apparatus for exchanging heat or controlling temperature of water and fuel in the system. The switching device 146 may correspond to a device for connecting the constant circuit unit to the output terminal of the fuel cell stack.

The microprocessor as described above can be implemented by at least one of many processors having various architectures, such as the Alpha processors from Digital Equipment Corporation, MIPS processors from MIPS technology, NEC, IDT, Siemens, etc., x86 processor from companies including Intel, Cyrix, AMD, and Nexgen, and PowerPC processors from IBM and Motorola. The input stage 116 can be implemented by an analog-digital converter and the output stage 118 can be implemented by a digital-analog converter and/or an output buffer.

In the present embodiment the control apparatus is described as being implemented by a microprocessor. However, the present invention is not limited to microprocessors. For example, the control apparatus could include a comparator for comparing signals input from a sensor unit instead of a high-performance microprocessor and an operating controller, which is implemented as a logical circuit, for increasing or maintaining the fuel concentration according to the magnitude of the output signal from the comparator. Such a modification would be readily apparent to those skilled in the art.

As described above, with the present invention, the fuel concentration near the anode inlet of the fuel cell stack is easily judged based on the change in the fuel cell output voltage according to the sudden change in the fuel cell output current per unit area naturally or artificially so that the fuel concentration suitable for the small DLFC can easily be maintained, making it possible to improve the operation performance and reliability of the DLFC system as well as contribute to a design of a high-performance small DLFC system.

Although embodiments in accordance with the present invention have been shown and described, it would be appreciated by those skilled in the art that changes might be made in the embodiments without departing from the principles of the invention, the scope of which is defined in the claims and their equivalents.

## Claims

1. A method for controlling fuel concentration in a direct liquid fuel cell (10, 10a) comprising:
(a) monitoring fuel cell output current and fuel cell output voltage of a fuel cell stack of the direct liquid fuel cell (10, 10a);
(b) sensing whether fuel cell output current per unit area becomes lowered by more than a certain magnitude and is maintained at a substantially constant level for a predetermined time;
(c) sensing the fuel cell output voltage from an initial fuel cell output voltage just before a point in time when current per unit area is lowered, to a new fuel cell output voltage, the new fuel cell output voltage being increased as the current per unit. area is lowered and then maintained at the new current per unit area;
(d) comparing the new fuel cell output voltage with a sensed transient voltage occurring between the initial fuel cell output voltage and the new fuel cell output voltage; and
(e) if the transient voltage is equal to or less than the new fuel cell output voltage, increasing fuel concentration in a liquid fuel supplied to the fuel cell stack.

2. A method for controlling fuel concentration in a direct liquid fuel cell as claimed in claim 1, further comprising maintaining the fuel concentration in liquid fuel supplied to the fuel cell stack, if the transient voltage is greater than the new fuel cell output voltage.

3. A method for controlling fuel concentration in a direct liquid fuel cell as claimed in claim 1 or 2, wherein the certain magnitude has a value of 30mA/cm² or greater.

4. A method for controlling fuel concentration in a direct liquid fuel cell as claimed in any preceding claim, wherein the predetermined time has a value of 2 seconds or more.

5. A method for controlling fuel concentration in a direct liquid fuel cell as claimed in any preceding claim, wherein the liquid fuel includes a methanol aqueous solution and a proper range of the fuel concentration near the anode inlet of the fuel cell stack is over 0.5 molar.

6. A method for controlling fuel concentration in a direct liquid fuel cell (10, 10a) comprising:
(a) limiting fuel cell output current so that fuel cell output current per unit area of a fuel cell stack is lowered by more than a certain magnitude;
(b) sensing from an initial fuel cell output voltage just before a point in time when the current per unit area is lowered, to a new fuel cell output voltage, the new fuel cell output voltage being increased as current per unit area is lowered and then maintained substantially constant;
(c) comparing the new fuel cell output voltage with a sensed transient voltage positioned between the initial fuel cell output voltage and the new fuel cell output voltage; and
(d) if the transient voltage is less than or equal to the new fuel cell output voltage, increasing the fuel concentration in a liquid fuel supplied to the fuel cell stack.

7. A method for controlling fuel concentration in a direct liquid fuel cell as claimed in claim 6, wherein (a) includes connecting a constant current circuit unit between the fuel cell stack and an external load.

8. A method for controlling fuel concentration in a direct liquid fuel cell as claimed in claim 7, wherein the constant current circuit unit further comprises a constant current diode serially connected between the fuel cell stack and the external load.

9. An apparatus for controlling fuel concentration in a direct liquid fuel cell (10, 10a), the fuel concentration being for liquid fuel directly supplied to an anode of a fuel cell stack, the apparatus comprising:
a constant current circuit unit for stepwise lowering the current per unit area in the fuel cell stack;
a sensor for sensing from an initial fuel cell output voltage just before a point in time when the current per unit area is lowered, to a new fuel cell output voltage, the new fuel cell output voltage being increased from the point in time and being then stabilized at a constant level;
a comparator for comparing the new fuel cell output voltage with a sensed transient voltage between the initial fuel cell output voltage and the new fuel cell output voltage; and
an operating controller for increasing the fuel concentration in a liquid fuel supplied to the fuel cell stack if the transient voltage is less than or equal to the new fuel cell output voltage.

10. An apparatus for controlling fuel concentration in a direct liquid fuel cell as claimed in claim 9, wherein the constant circuit unit further comprises a constant current diode serially connected between the fuel cell stack and an external load.

11. An apparatus for controlling fuel concentration in a direct liquid fuel cell (10, 10a), which controls the fuel concentration in the liquid fuel directly supplied to an anode of a fuel cell stack, the control apparatus comprising:
a memory for storing a program; and
a processor connected to the memory for performing the program,
wherein the processor functions, by means of the program, to:
output a test current, which changes from a first current per unit area to a second current per unit area less than the first current per unit area, from the fuel cell stack;
sense a new fuel cell output voltage increase in response to the test current from the fuel cell stack; and
if a sensed transient voltage prior to reaching the new fuel cell output voltage is equal to or less than the new fuel cell output voltage, increase the fuel concentration in the liquid fuel.

12. An apparatus for controlling fuel concentration in a direct liquid fuel cell (10, 10a) as claimed in claim 11, wherein the processor controls a switching device serially connecting a constant current diode between the fuel cell stack and an external load in order to generate the test current.

13. An apparatus for controlling fuel concentration in a direct liquid fuel cell (10, 10a), the apparatus comprising:
a fuel cell stack having an anode, a cathode, and an electrolyte positioned between the anode and the cathode and generating electric energy by an electrochemical reaction of a liquid fuel supplied to the anode and an oxidant supplied to the cathode;
a fuel supply device supplying the liquid fuel to the fuel cell stack; and
a control apparatus for controlling the fuel supply device in order to control the fuel concentration in the liquid fuel supplied to the fuel cell stack,
wherein the control apparatus further includes:
apparatus according to one of claims 9 to 12.

## Patentansprüche

1. Verfahren zum Steuern der Brennstoffkonzentration in einer Direkt-Flüssigbrennstoffzelle (10, 10a), umfassend:
(a) Überwachen des Brennstoffzellen-Ausgangsstroms und der Brennstoffzellen-Ausgangsspannung eines Brennstoffzellenstacks der Direkt-Flüssigbrennstoffzelle (10, 10a);
(b) Messen, ob der Brennstoffzellen-Ausgangsstrom pro Flächeneinheit um mehr als einen bestimmten Betrag gesenkt wird und für eine vorbestimmte Zeit auf einem im wesentlichen konstanten Pegel gehalten wird;
(c) Messen der Brennstoffzellen-Ausgangsspannung von einer anfänglichen Brennstoffzellen-Ausgangsspannung unmittelbar vor einem Zeitpunkt, wo der Strom pro Flächeneinheit gesenkt wird, zu einer neuen Brennstoffzellen-Ausgangsspannung, wobei die neue Brennstoffzellen-Ausgangsspanuung erhöht wird, wenn der Strom pro Flächeneinheit gesenkt und dann auf dem neuen Strom pro Flächeneinheit gehalten wird;
(d) Vergleichen der neuen Brennstoffzellen-Ausgangsspannung mit einer gemessenen Einschwingspannung, die zwischen der anfänglichen Brennstoffzellen-Ausgangsspannung und der neuen Brennstoffzellen-Ausgangsspannung auftritt; und
(e) wenn die Einschwingspannung gleich der oder kleiner als die neue Brennstoffzellen-Ausgangsspannung ist, Erhöhen der Brennstoffkonzentration in einem Flüssigbrennstoff, der dem Brennstoffzellenstack zugeführt wird.

2. Verfahren zum Steuern der Brennstoffkonzentration in einer Direkt-Flüssigbrennstoffzelle nach Anspruch 1, ferner umfassend: Halten der Brennstoffkonzentration im Flüssigbrennstoff, der dem Brennstoffzellenstack zugeführt wird, wenn die Einschwingspannung größer als die neue Brennstoffzellen-Ausgangsspannung ist.

3. Verfahren zum Steuern der Brennstoffkonzentration in einer Direkt-Flüssigbrennstoffzelle nach Anspruch 1 oder 2, worin der bestimmte Betrag einen Wert von 30 mA/cm² oder größer hat.

4. Verfahren zum Steuern der Brennstoffkonzentration in einer Direkt-Flüssigbrennstoffzelle nach einem der vorhergehenden Ansprüche, worin die vorbestimmte Zeit einen Wert von 2 Sekunden oder mehr hat.

5. Verfahren zum Steuern der Brennstoffkonzentration in einer Direkt-Flüssigbrennstoffzelle nach einem der vorhergehenden Ansprüche, worin der Flüssigbrennstoff eine wässrige Methanollösung aufweist und ein geeigneter Bereich der Brennstoffkonzentration nahe dem Anodeneinlass des Brennstoffzellenstacks über 0,5-molar ist.

6. Verfahren zum Steuern der Brennstoffkonzentration in einer Direkt-Flüssigbrennstoffzelle (10, 10a), umfassend:
(a) Begrenzen des Brennstoffzellen-Ausgangsstroms, so dass der Brennstoffzellen-Ausgangsstrom pro Flächeneinheit eines Brennstoffzellenstacks um mehr als einen bestimmten Betrag gesenkt wird;
(b) Messen von einer anfänglichen Brennstoffzellen-Ausgangsspannung unmittelbar vor einem Zeitpunkt, wo der Strom pro Flächeneinheit gesenkt wird, zu einer neuen Brennstoffzellen-Ausgangsspannung, wobei die neue Brennstoffzellen-Ausgangsspannung erhöht wird, wenn der Strom pro Flächeneinheit gesenkt wird, und dann im wesentlichen konstant gehalten wird;
(c) Vergleichen der neuen Brennstoffzellen-Ausgangsspannung mit einer gemessenen Einschwingspannung, die zwischen der anfänglichen Brennstoffzellen-Ausgangsspannung und der neuen Brennstoffzellen-Ausgangsspannung liegt; und
(d) wenn die Einschwingspannung kleiner als die oder gleich der neue(n) Brennstoffzellen-Ausgangsspannung ist, Erhöhen der Brennstoffkonzentration in einem Flüssigbrennstoff, der dem Brennstoffzellenstack zugeführt wird.

7. Verfahren zum Steuern der Brennstoffkonzentration in einer Direkt-Flüssigbrennstoffzelle nach Anspruch 6, worin (a) einschließt: Schalten einer Konstantstromschaltungseinheit zwischen den Brennstoffzellenstack und eine externe Last.

8. Verfahren zum Steuern der Brennstoffkonzentration in einer Direkt-Flüssigbrennstoffzelle nach Anspruch 7, worin die Konstantstromschaltungseinheit ferner eine Konstantstromdiode umfasst, die in Reihe zwischen den Brennstoffzellenstack und die externe Last geschaltet ist.

9. Vorrichtung zum Steuern der Brennstoffkonzentration in einer Direkt-Flüssigbrennstoffzelle (10, 10a), wobei die Brennstoffkonzentration für Flüssigbrennstoff gilt, der einer Anode eines Brennstoffzellenstacks direkt zugeführt wird, wobei die Vorrichtung umfasst:
eine Konstantstromschaltungseinheit zum schrittweisen Senken des Stroms pro Flächeneinheit im Brennstoffzellenstack;
einen Sensor zum Messen von einer anfänglichen Brennstoffzellen-Ausgangsspannung unmittelbar vor einem Zeitpunkt, wo der Strom pro Flächeneinheit gesenkt wird, zu einer neuen Brennstoffzellen-Ausgangsspannung, wobei die neue Brennstoffzellen-Ausgangsspannung von dem Zeitpunkt an erhöht wird und dann auf einem konstanten Pegel stabilisiert wird;
einen Vergleicher zum Vergleichen der neuen Brennstoffzellen-Ausgangsspannung mit einer gemessenen Einschwingspannung zwischen der anfänglichen Brennstoffzellen-Ausgangsspannung und der neuen Brennstoffzellen-Ausgangsspannung; und
eine Betriebssteuerungseinrichtung zum Erhöhen der Brennstoffkonzentration in einem Flüssighrennstoff, der dem Brennstoffzellenstack zugeführt wird, wenn die Einschwingspannung gleich der oder kleiner als die neue(n) Brennstoffzellen-Ausgangsspannung ist.

10. Vorrichtung zum Steuern der Brennstoffkonzentration in einer Direkt-Flüssigbrennstoffzelle nach Anspruch 9, worin die Konstantstromschaltungseinheit ferner eine Konstantstromdiode umfasst, die in Reihe zwischen den Brennstoffzellenstack und eine externe Last geschaltet ist.

11. Vorrichtung zum Steuern der Brennstoffkonzentration in einer Direkt-Flüssigbrennstoffzelle (10, 10a), welche die Brennstoffkonzentration im Flüssigbrennstoff steuert, der einer Anode eines Brennstoffzellenstacks direkt zugeführt wird, wobei die Steuerungsvorrichtung umfasst:
einen Speicher zum Speichern eines Programms; und
einen mit dem Speicher verbundenen Prozessor zum Durchführen des Programms,
worin der Prozessor mittels des Programms arbeitet, um:
einen Prüfstrom vom Brennstoffzellenstack auszugeben, der sich von einem ersten Strom pro Flächeneinheit zu einem zweiten Strom pro Flächeneinheit, der kleiner als der erste Strom pro Flächeneinheit ist, ändert;
einen Anstieg der neuen Brennstoffzellen-Ausgangsspannung als Antwort auf den Prüfstrom vom Brennstoffzellenstack zu messen; und
wenn eine gemessene Einschwingspannung vor dem Erreichen der neuen Brennstoffzellen-Ausgangsspannung gleich der oder kleiner als die neue(n) Brennstoffzellen-Ausgangsspannung ist, die Brennstoffkonzentration im Flüssigbrennstoff zu erhöhen.

12. Vorrichtung zum Steuern der Brennstoffkonzentration in einer Direkt-Flüssigbrennstoffzelle (10, 10a) nach Anspruch 11, worin der Prozessor ein Schaltbauelement steuert, das eine Konstantstromdiode in Reihe zwischen den Brennstoffzellenstack und eine externe Last schaltet, um den Prüfstrom zu erzeugen.

13. Vorrichtung zum Steuern der Brennstoffkonzentration in einer Direkt-Flüssigbrennstoffzelle (10, 10a), wobei die Vorrichtung umfasst:
einen Brennstoffzellenstack, der eine Anode, eine Kathode und einen zwischen der Anode und der Kathode angeordneten Elektrolyt hat und elektrische Energie durch eine elektrochemische Reaktion eines der Anode zugeführten Flüssigbrennstoffs und eines der Kathode zugeführten Oxidationsmittels erzeugt;
eine Brennstoffzufuhrvorrichtung, die dem Brennstoffzellenstack den Flüssigbrennstoff zuführt; und
eine Steuerungsvorrichtung zum Steuern der Brennstoffzufuhrvorrichtung, um die Brennstoffkonzentration im Flüssigbrennstoff, der dem Brennstoffzellenstack zugeführt wird, zu steuern,
worin die Steuerungsvorrichtung ferner aufweist:
eine Vorrichtung nach einem der Ansprüche 9 bis 12.

## Revendications

1. Procédé pour commander la concentration de combustible dans une pile à combustible liquide direct (10, 10a) comprenant :
(a) la surveillance d'un courant de sortie de pile à combustible et d'une tension de sortie de pile à combustible d'un empilage de piles à combustible de la pile à combustible liquide direct (10, 10a) ;
(b) la détection si un courant de sortie de pile à combustible par surface unitaire a diminué de plus d'une certaine amplitude et est maintenu à un niveau sensiblement constant pendant un temps prédéterminé ;
(c) la détection de la tension de sortie de pile à combustible d'une tension de sortie de pile à combustible initiale juste avant un instant auquel un courant par surface unitaire a diminué jusqu'à une nouvelle tension de sortie de pile à combustible, la nouvelle tension de sortie de pile à combustible étant augmentée alors que le courant par surface unitaire a diminué et est ensuite maintenu au nouveau courant par surface unitaire ;
(d) la comparaison de la nouvelle tension de sortie de pile à combustible avec une tension transitoire détectée apparaissant entre la tension de sortie de pile à combustible initiale et la nouvelle tension de sortie de pile à combustible ; et
(e) si la tension transitoire est égale ou inférieure à la nouvelle tension de sortie de pile à combustible, l'augmentation de la concentration de combustible dans un combustible liquide fourni à l'empilage de piles à combustible.

2. Procédé pour commander la concentration de combustible dans une pile à combustible liquide direct selon la revendication 1, comprenant en outre le maintien de la concentration de combustible dans un combustible liquide délivré à l'empilage de piles à combustible, si la tension transitoire est supérieure à la nouvelle tension de sortie de pile à combustible.

3. Procédé pour commander la concentration de combustible dans une pile à combustible liquide direct selon la revendication 1 ou 2, dans lequel la certaine amplitude a une valeur de 30 mA/cm² ou plus.

4. Procédé pour commander la concentration de combustible dans une pile à combustible liquide direct selon l'une quelconque des revendications précédentes, dans lequel le temps prédéterminé a une valeur de 2 secondes ou plus.

5. Procédé pour commander la concentration de combustible dans une pile à combustible liquide direct selon l'une quelconque des revendications précédentes, dans lequel le combustible liquide comprend une solution aqueuse de méthanol et une plage correcte de la concentration de combustible à proximité d'une entrée d'anode de l'empilage de piles à combustible est au-dessus de 0,5 mole.

6. Procédé pour commander la concentration de combustible dans une pile à combustible liquide direct (10, 10a) comprenant :
(a) la limitation d'un courant de sortie de pile à combustible de sorte qu'un courant de sortie de pile à combustible par surface unitaire d'un empilage de piles à combustible soit diminué de plus d'une certaine amplitude ;
(b) la détection, d'une tension de sortie de pile à combustible initiale juste avant un instant auquel le courant par surface unitaire a diminué jusqu'à une nouvelle tension de sortie de pile à combustible, la nouvelle tension de sortie de pile à combustible étant augmentée alors que le courant par surface unitaire a diminué et est ensuite maintenu sensiblement constant ;
(c) la comparaison de la nouvelle tension de sortie de pile à combustible avec une tension transitoire détectée positionnée entre la tension de sortie de pile à combustible initiale et la nouvelle tension de sortie de pile à combustible; et
(d) si la tension transitoire est inférieure ou égale à la nouvelle tension de sortie de pile à combustible, l'augmentation de la concentration de combustible dans un combustible liquide délivré à l'empilage de piles à combustible.

7. Procédé pour commander la concentration de combustible dans une pile à combustible liquide direct selon la revendication 6, dans lequel l'étape (a) comprend la connexion d'une unité de circuit à courant constant entre l'empilage de piles à combustible et une charge externe.

8. Procédé pour commander la concentration de combustible dans une pile à combustible liquide direct selon la revendication 7, dans lequel l'unité de circuit à courant constant comprend en outre une diode de courant constant connectée en série entre l'empilage de piles à combustible et la charge externe.

9. Appareil pour commander la concentration de combustible dans une pile à combustible liquide direct (10, 10a), la concentration de combustible concernant un combustible liquide délivré directement à une anode d'un empilage de piles à combustible, l'appareil comprenant :
une unité de circuit à courant constant pour diminuer par pas le courant par surface unitaire dans l'empilage de piles à combustible ;
un capteur pour détecter, d'une tension de sortie de pile à combustible initiale juste avant un instant auquel le courant par surface unitaire a diminué jusqu'à une nouvelle tension de sortie de pile à combustible, la nouvelle tension de sortie de pile à combustible étant augmentée à partir de l'instant et étant ensuite stabilisée à un niveau constant ;
un comparateur pour comparer la nouvelle tension de sortie de pile à combustible avec une tension transitoire détectée entre la tension de sortie de pile à combustible initiale et la nouvelle tension de sortie de pile à combustible ; et
un contrôleur de commande pour augmenter la concentration de combustible dans un combustible liquide délivré à l'empilage de piles à combustible si la tension transitoire est inférieure ou égale à la nouvelle tension de sortie de pile à combustible.

10. Appareil pour commander la concentration de combustible dans une pile à combustible liquide direct selon la revendication 9, dans lequel l'unité de circuit à courant constant comprend en outre une diode de courant constant connectée en série entre l'empilage de piles à combustible et une charge externe.

11. Appareil pour commander la concentration de combustible dans une pile à combustible liquide direct (10, 10a), qui commande la concentration de combustible dans le combustible liquide délivré directement à une anode d'un empilage de piles à combustible, l'appareil de commande comprenant :
une mémoire pour mémoriser un programme ; et
un processeur connecté à la mémoire pour exécuter le programme,
dans lequel le processeur fonctionne, au moyen du programme, pour :
délivrer un courant de test, qui change d'un premier courant par surface unitaire à un deuxième courant par surface unitaire inférieur au premier courant par surface unitaire, à partir de l'empilage de piles à combustible :
détecter une augmentation de la nouvelle tension de sortie de pile à combustible en réponse au courant de test provenant de l'empilage de piles à combustible ; et
si une tension transitoire détectée avant d'atteindre la nouvelle tension de sortie de pile à combustible est égale ou inférieure à la nouvelle tension de sortie de pile à combustible, augmenter la concentration de combustible dans le combustible liquide.

12. Appareil pour commander la concentration de combustible dans une pile à combustible liquide direct (10, 10a) selon la revendication 11, dans lequel le processeur commande un dispositif de commutation connectant en série une diode de courant constant entre l'empilage de piles à combustible et une charge externe afin de générer le courant de test.

13. Appareil pour commander la concentration de combustible dans une pile à combustible liquide direct (10, 10a), l'appareil comprenant :
un empilage de piles à combustible comportant une anode, une cathode, et un électrolyte positionné entre l'anode et la cathode et générant une énergie électrique par une réaction électrochimique d'un combustible liquide délivré à l'anode et d'un oxydant délivré à la cathode ;
un dispositif d'alimentation en combustible fournissant le combustible liquide à l'empilage de piles à combustible ; et
un appareil de commande pour commander le dispositif d'alimentation en combustible afin de commander la concentration de combustible dans le combustible liquide délivré à l'empilage de piles à combustible,
dans lequel l'appareil de commande comprend en outre :
un appareil selon l'une des revendications 9 à 12.
